# NEW EUROPEAN PATENT SPECIFICATION

(11) **EP 0 266 107 B2**
(45) Date of publication and mention of the opposition decision: **10.01.1996**
(45) Mention of the grant of the patent: 15.01.1992
(21) Application number: 87309198.7
(22) Date of filing: 19.10.1987
(51) Int. Cl.: B29C 45/16

(54) **Injection molded plastic article with integral weatherable pigmented film surface**
Spritzteil aus Kunststoff mit integrierter, witterungsbeständiger, pigmentierter Aussenschicht
Article en plastique, moulé par injection comportant une couche de finition intégrée, pigmentée et résistant aux intempéries

(30) Priority: 28.10.1986 US 924295
(43) Date of publication of application: 04.05.1988
(73) Proprietor: REXHAM INDUSTRIES CORP., Charlotte, North Carolina 28247 (US)
(72) Inventor: Ellison, Thomas M., Charlotte North Carolina 28210 (US); Keith, Brian M, Waxhaw North Carolina 28173 (US)
(74) Representative: MacDougall, Donald Carmichael

(56) References cited:
- EP-A- 0 251 546
- EP-B- 0 230 364
- DE-A- 3 441 906
- FR-A- 2 085 615
- GB-A- 1 232 971
- GB-A- 2 084 513
- JP-A-13 523 484
- JP-A-56 140 064
- JP-A-59 227 447
- US-A- 3 459 834
- US-A- 3 524 906
- US-A- 3 579 485
- US-A- 3 679 510
- US-A- 3 949 139
- US-A- 4 263 077
- US-A- 4 303 697
- US-A- 4 314 004
- US-A- 4 349 592
- US-A- 4 451 522
- US-A- 4 451 597
- US-A- 4 486 478
- US-A- 4 507 342
- US-A- 4 548 857
- "Dateline: Detroit SAE Show News Bulletins", PLastics Technology, April 1986
- Eastman Chemicals Publication No. GN-355, Nov. 1983
- "Solvent-Cast Films", Plastics Engineering, May 1983
- Rexham Publication "Brillant Performance", Oct. 1987
- Technical Publication "In-Mold Decorating and Finishing Plastics Part with Dry Paint Film" by T. M. Ellison, Oct. 1993
- "Auto Parts Makers to Move Production to North America", Japan Economic Journal, 18.10.1986
- "Automakers Continue To Say Yes to Plastics", Machine Design, 25.10.1984
- "Future Looks Bright for European Plastics", Automotive Industries, Sept. 1984
- "Honda's CRX Sports Plastics Innovation", Ward's Auto World, Sept. 1983
- Modern Plastics, Oct. 186, pages 22 to 24
- "Polypropylene", Modern Plastics Encyclopedia, 1984-85, P. 80
- Anonymous Reasearch Disclosure, July 1984
- "Flouropolymer gives Ford flair", British Plastics & Rubber, Oct. 1983
- US Trademark Reg. 1554682 for the mark Fluorex, published 13.06.89

## Description

### Field of the Invention

This invention relates to a molded automobile exterior body part formed from a molded polymer substrate which has a molded decorative sheet material adhered to the outer surface thereof.

### Background of the Invention

The trend in the automobile industry is towards increased use of plastic body panels in automobile construction. Use of such panels permits the weight of automobiles to be decreased, tooling costs arising from body styling changes to be decreased, and styling freedom in car design to be increased. Other advantages arising from this type of construction include reduced facility costs and factory floor space requirements, and process cycle times allowing the just-in-time, low inventory manufacturing of parts at or near the automobile assembly plant. See C. Kirkland and P. Dickard, Dateline: Detroit. SAE Show News Bulletins. Plastic Technology, page 103 (April 1986).

A significant problem with plastic automobile body parts is that many of the most desirable molding polymers for such parts are not weatherable. Moreover, many such polymers do not provide a good bonding surface for paints. Even where paint bonding problems are overcome, conventional spray-painting techniques pose a significant pollution problem arising from the evaporation of noxious paint solvents, and, further, are very expensive if a high quality, multiple coat paint finish is to be obtained. Because the overall finished appearance of an automobile is among its most important selling features, these problems are serious, and a great deal of effort and expense are being devoted to their solution. See. e.g., Automotive Coatings: Helping Detroit Woo Consumers, Chemical Week, page 30, (July 4, 1984).

Various molded polymer automobile parts with film surfaces have been made in the past. For example, clear, unpigmented, nonweatherable, cast PVC films have been used to surface interior automobile parts. Another example, U.S. Patent No. 3,679,510 to Conley and Ellison, discloses a reverse-printed, oriented, polyvinyl fluoride film bonded to a molded polymer substrate. Such weatherable, oriented films are excellent for use in making side rails and other automobile trim parts. These films are, however, difficult to uniformly internally pigment--particularly when the film must provide the same high-quality decorative appearance as a painted automobile body panel--and are generally not suitable for use in a deep draw molding procedure. See also U.S. Patent No. 4,369,157 to Connor.

Accordingly, an object of the present invention is to provide a molded automobile exterior body part which has a weatherable surface and a high grade decorative finish.

An additional object of the invention is to provide an article of the type described which can be deep draw molded into various three-dimensional shapes used in automobile body parts.

### Summary of the Invention

These and other objects and advantages of the present invention are achieved in the embodiments illustrated herein by the provision of an article having a contoured, decorative outer surface. The article is comprised of a molded polymer substrate and a decorative sheet material adhered to one side of the substrate and conforming to the contoured surface. The decorative sheet material comprises a substantially molecularly unoriented cast polymer film formed from a weatherable polymer, which film has pigments, such as colored pigments or reflective flakes, uniformly distributed therein.

Use of a cast polymer film facilitates the uniform distribution of the pigments within the film and enables the production of a high-quality decorative sheet material with an appearance suitable for use on an automobile body panel. Such pigmented, cast, weatherable films are suitable for deep draw molding, as will be explained below, and do not require the use of separate pigment layers in addition to a protective weatherable outer layer. While cast films do not have as great a tear strength as oriented films, this characteristic can be turned to an advantage in practicing the present invention, as will be explained below.

A shaped article as described above is made by placing into a mold having a contoured, three-dimensional molding surface, a preformed decorative sheet material of the type described above. A moldable polymer is then introduced into the mold on one side of the sheet material. The sheet material is then molded into a contoured threedimensional configuration conforming to the molding surface of said mold, while molding said polymer to form a shaped article with the decorative sheet material adhered to the outer surface thereof.

The decorative sheet material also includes a bonding layer having a polymer different from the cast film, wherein the decorative sheet material is placed into the mold with the bonding layer oriented inwardly away from the molding surface so as to become adhered to the moldable polymer.

Also disclosed herein is an automobile body which has a uniform decorative outer surface, which is comprised of a set of interconnected shaped articles formed from a molded polymer material (and optionally from a plurality of different moldable polymer materials), and a set of articles for assembly into such a structure. Each article in the set is preferably formed of a moldable polymer which is selected to provide the desired structural properties to the particular location in the assembled structure in which it is installed. At the same time, while the assembled structure may be formed from different structural polymer materials, it has an outer surface which is uniformly colored in accordance with a predetermined color scheme (single colored, multicolored, etc.). The body parts may be produced by first placing into a mold a preformed decorative sheet material of the type described above, then introducing a moldable polymer into the mold as described above, and then molding the sheet material and the polymer, as also described above. These three steps (placing sheet material into mold; introducing polymer into mold; molding sheet material and polymer) are then repeated for each article in the set, so that each article in the set has the same weatherable cast pigmented polymer film on the outer surface thereof. As stated above, the articles in the set may or may not all be formed of the same moldable material. Therefore, for the making of each article, the decorative sheet material has a bonding layer of a material which has been preselected to adhere to the particular moldable polymer from which that particular article is made. While molding polymers may thus advantageously differ from article to article, and bonding layers may accordingly differ from article to article, every article in the set has the same cast pigmented film on the outer surface thereof. As a result, when the set of molded articles is assembled into the aforesaid structure, the need for spray-painting the structure to otherwise provide it with a uniform decorative outer surface is eliminated.

### Brief Description of the Drawings

Figure 1 is a schematic illustration of an apparatus and procedure for making molded plastic articles of the present invention.

Figure 2 is a cross-section of a decorative film, taken along the line 2-2 of Figure 1.

Figure 3 is a perspective view of an automobile formed from a set of molded plastic articles of the present invention.

Figure 4 is an exploded view of a set of molded plastic articles of the present invention.

Figure 5 is a cross-section of a molded plastic article taken along the line 5-5 of Figure 4.

### Detailed Description of the Invention

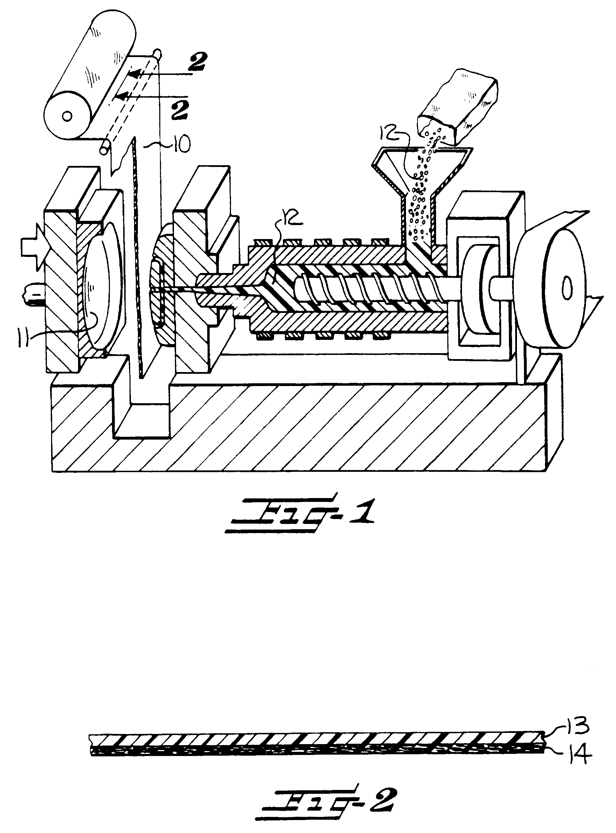

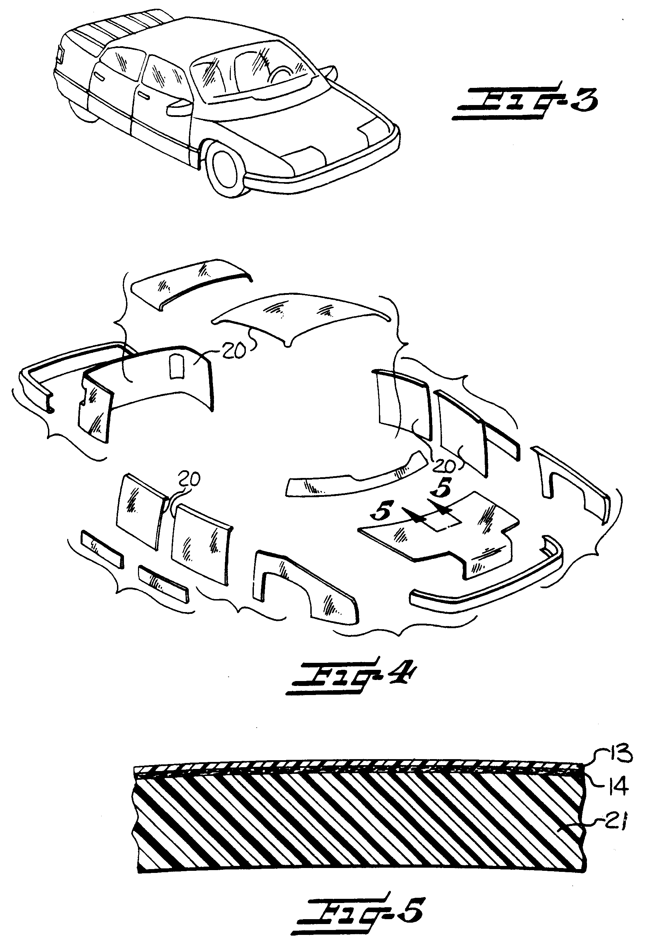

Molded plastic articles of the present invention can be made by placing a preformed decorative sheet material 10 into a mold 11, closing the mold, and injecting a moldable polymer 12 into the mold on the inner side of the film 10 (see Figure 1). The decorative sheet material, as shown in Figure 2, comprises a substantially molecularly unoriented weatherable cast film 13 which has pigments uniformly distributed therein, and a bonding layer 14 formed of a different polymer adhered to the inner side of the cast film.

Molded plastic articles 20 of the present invention are particularly suitable for use as outer body panels in an automobile, as illustrated in Figure 3. Such an automobile has a body which is comprised of a set of molded plastic articles 20, as illustrated in Figure 4. Figure 5 illustrates a cross section of a molded plastic article of the present invention, with the preformed decorative sheet material 10 adhered to the molded polymer substrate 21. Figure 5 shows that the bonding layer 14 is adhered to the molded polymer substrate 21, with the weatherable cast film on the outer surface of the article.

Cast films for practicing the present invention should be selected so they are pigmentable, thermoformable and weatherable. Such films are substantially molecularly unoriented cast films, as opposed to films which have been oriented or biaxially oriented. The films are "preformed" films, in that they are provided as self-supporting sheets of material. Such films are prepared by a number of known liquid casting methods, such as by spreading a solvent solution having a polymer dissolved therein onto a carrier with a casting die, doctor bar, or reverse roll coater, then evaporating the solvent, and then stripping the polymer film from the carrier. The reverse-roll coating method is the preferred method of making liquid cast films for the present invention. Other liquid casting methods are also known and useful for practicing the present invention. In appropriate cases, a plastisol, organosol, or dispersion of the polymer can be cast onto the carrier instead of a solvent solution. For example, polytetrafluoroethylene, which is virtually insoluble, can be cast as a dispersion. Such liquid cast film processes, and some current uses of cast films, are discussed in Plastics Engineering, at pages 29-33 (May, 1983). Thus, for purposes of the present invention, "substantially molecularly unoriented cast films" are liquid cast films, and not melt cast films or films formed by extrusion.

Colored pigments are uniformly distributed in the cast film by dispersing them in a vehicle compatible with the liquid from which the film is cast, and mixing the vehicle with the same prior to casting the film. Preferably, reflective flake pigments, such as aluminum flakes of the type used to produce metallic finishes on automobiles, or mica flakes, either surface treated (e.g., pigmented) or not, of the type used in automobile finishes, are uniformly distributed in the cast film in like manner. U.V. screeners are added as needed to improve the weatherability of the cast films.

Polymers suitable for forming such weatherable cast films are selected to provide a pigmented film which will not significantly fade, peel, chalk, or crack, when exposed to the environment, for the intended life of the product for which the molded plastic article is made. A number of known testing procedures, in which objects are exposed to either the natural environment over an extended time or a harsh artificial environment for a short time, are used to determine the weatherability of polymers. Such weatherable polymers include fluoropolymers, acrylate polymers, urethane polymers, and blends thereof. Acrylate polymers useful for practicing the present invention are obtained from a variety of acrylic monomers, such as acrylic and methacrylic acids, and their amides, esters, salts, and corresponding nitriles. Particularly suitable monomers for such polymers are methyl methacrylate, ethyl acrylate, and acrylonitrile. The polymers may each be used in the form of homopolymers, or with various other monomers which can be copolymerized therewith. Additional illustrative examples of acrylate polymers which may be useful for the present invention are thermoplastic polyacrylates and polymethacrylates which are homopolymers and copolymers of acrylic acid ester and methacrylic acid ester, such as, for example, polyacrylic acid isobutyl ester, polymethacrylic acid methyl ester, polymethacrylic acid ethylhexyl ester, polyacrylic acid ethyl ester; copolymers of various acrylic acid esters and/or methacrylic acid esters, such as, for example, methacrylic acid methyl ester/acrylic acid cyclohexyl ester copolymers; and copolymers of acrylic acid esters and/or methacrylic acid esters with styrene and/or alpha-methylstyrene, as well as the graft polymers and copolymers and polymer mixtures composed of acrylic esters, methacrylic acid esters, styrene and butadiene. A group of transparent, weatherable blends of acrylate polymers and polyvinylidene fluoride polymers useful for practicing the present invention are disclosed in U.S. Patent No. 3,524,906. The disclosures of this patent, and all other patent references cited herein, are specifically intended to be incorporated herein by reference.

Fluoropolymers useful for practicing the present invention include polymers and copolymers formed from trifluoroethylene, tetrafluoroethylene, hexafluoropropylene, monochlorotrifluoroethylene and dichlorodifluoroethylene. Copolymers of these monomers formed from fluoroolefins such as vinylidene fluoride are also useful. Further illustrative examples of fluoropolymers useful for practicing the present invention include polyvinyl fluoride and polyvinylidene fluoride. The fluoropolymer may be a fluorinated ethylene/propylene copolymer, or a copolymer of ethylene/chlorotrifluoroethylene. Vinylidene fluoride/hexafluoropropene and vinylidene fluoride/perfluoro (alkyl vinyl ether) dipolymers and terpolymers with tetrafluoroethylene are additional illustrative fluoropolymers useful for practicing the present invention.

A preferred weatherable polymer for use in the present invention is an alloy of an acrylic polymer and polyvinylidene fluoride, such as "FLUOREX" (a trademark of Rexham Corporation).

Urethane polymers useful for practicing the present invention are prepared by reacting a polyisocyanate with a compound containing at least two active hydrogen atoms, such as a polyol, a polyamine, or a polyisocyanate. Polyurethane resins for use in the present invention should be selected from resins in which the reactants have been chosen to provide weatherable thermoformable polymers. Numerous suitable polyurethane resins useful for practicing the present invention are available. Generally, aromatic polyisocyanates tend to yellow, and aliphatic polyisocyanates are more preferred. Particularly noteworthy recent developments in this area are disclosed in U.S. Patent No. 4,578,426 (disclosing resins which give coatings resistant to gasoline and having high flexibility, scratch resistance and weather resistance) and U.S. Patent No. 4,501,852 (disclosing chemical resistant, abrasion resistant, elastic and durable polyurethanes).

The molded polymer substrate should be selected to provide engineering properties (rigidity, etc.) suited to the specific end use of the particular article made. Such polymers are well known. Suitable polymers for the molded polymer substrate include, for example, polyvinyl chloride, polycarbonate, polystyrene, acrylonitrile-butadiene styrene, polyethylene, polypropylene, polyethylene terephthalate-glycol, nylon, and RIM urethanes. Polyolefin homopolymers and copolymers (ionomers, etc.) are inexpensive thermoplastic resins which have excellent molding properties and are particularly preferred for practicing the present invention. Polypropylene, for example, when glass filled and foamed with a blowing agent, has performance properties suitable for structural or engineering uses. Acid copolymers of polyethylene such as "SURLYN" (a trademark of E.I. Du Pont De Nemours) are similar in performance and in addition have exceptional toughness.

The bonding layer of the decorative film comprises a polymer coating applied to the inner surface of the cast polymer film. In a preferred embodiment, the bonding layer comprises a preformed film laminated to the inner surface of the cast film. Bonding of the decorative sheet to a polyolefin molded polymer substrate can be achieved with an intermediate bonding layer or layers in accordance with known laminating procedures, and with known adhesives. For example, a decorative sheet material of a cast polymer film layer which is bonded to or coated with a fusible olefin layer can be placed in a mold during injection of an olefin resin. Another approach is to bond a PVC film to a weatherable fluoropolymer film with an acrylic adhesive and, in turn, bond the PVC film to an olefin film with a polyester isocyanate adhesive. The cast film may also be laminated to an olefin film with a permanent type acrylic pressure-sensitive adhesive. Still another approach is to coat the cast film with a soluble olefin resin which adheres to the surfacing film and bonds to the injected resin without having or requiring an olefin film layer. Such a resin is chlorinated polyolefin 343-1 from Eastman Kodak. This resin may be used in conjunction with an acrylic primer or ingredient to bond to desired fluorocarbon films. Corona treatment of the olefin surface to be bonded to the cast film may optionally be used to achieve an optimum bond. Bonding may also be improved by surface treating the cast film, as by corona treatment.

Preferably, the tear strength of the cast film is less than the bond strength of the cast film to the molded polymer substrate. This will prevent tears from forming in the cast film, running across the surface of the molded article, and quickly destroying the article. Instead, the weatherable cast polymer film surface will flake off in small particles when disrupted by nicks and scratches from stones and other flying particles, as routinely confronts automobile surfaces. The inner bonding layer may be from about .25 to about 250 thousandths of an inch thick, with a thicker bonding layer preferred to secure the weatherable film to larger articles. The bonding layer need not be formed of a cast film, as long as it is sufficiently thermoformable. The cast weatherable film is between .5 (0,0127 mm) and 300 thousandths of an inch (7,62 mm) thick, and most preferably from about one to about two thousandths of an inch (0,0254 to 0,0508 mm) thick. Similar molded parts can be achieved with injected ABS and styrene by laminating the surface film to a corresponding substrate layer of ABS or styrene.

The body parts of the present invention may be produced on conventional molding equipment in accordance with known techniques. Particularly suitable injectionmolding equipment and techniques are disclosed in U.S. Patent Nos. 4,397,806 and 4,307,057 to Hettinga. The decorative film may be heated and vacuum formed in a separate forming mold prior to being placed in the injection mold, or may be shaped by heat and pressure in the injection mold.

The present invention is particularly suitable for deep draw molded articles. Deep draw articles, and deep draw molding procedures, are those in which the depth of the molded article is relatively large in relation to the length and width of the two-dimensional decorative sheet material from which the article is made. More particularly, the depth of the article should be such that substantial stretching and elongation of the decorative sheet material occurs at least in regions of the decorative sheet material. Such substantial stretching and elongation occur when the decorative sheet material is subjected to elongation of about 25% or more at least in regions thereof. The cast film is preferably formed from a polymer selected so that the decorative sheet material will maintain a paint-like appearance, and will not stress whiten, when stretched and elongated.

The present invention is explained further in the following nonlimiting examples.

### Example 1

A weatherable cast film formed from an alloy of an acrylic polymer and polyvinylidene fluoride, is formed with internal pigments, including reflective metallic flakes. The film is laminated to a polyvinylchloride (PVC) film with an acrylic adhesive. The multilayered film is then placed in a mold, the mold closed, and PVC injected into the mold behind the polyvinlychloride bonding layer. The PVC molding polymer and the weatherable film/PVC film laminate are then molded for a time and temperature sufficient to form a shaped article, with the weatherable film bonded to the outer surface thereof by the PVC bonding layer.

### Example 2

The procedure of Example 1 is repeated with polyethylene terephthalate-glycol (PETG) as the bonding substrate and with PETG as the molding polymer to form additional molded articles.

### Example 3

The same procedure is carried out as described in Example 1 above, except that the cast film is bonded to a PETG bonding film, and urethane is used as the molding resin.

### Example 4

The same procedure is carried out as described in Example 1 above, except that the cast film is bonded to an acrylonitrile butadiene styrene (ABS) bonding film, and ABS is used as the injection-molding polymer.

### Example 5

A weatherable cast film formed from an alloy of an acrylic polymer and polyvinylidene fluoride is bonded to a PVC film with an acrylic adhesive, and the PVC film is bonded to a polypropylene film bonding layer with a polyester isocyanate adhesive. An article is made according to the procedures set forth in Example 1, with polypropylene as the molding polymer. Other articles can be made with other olefins as bonding layers, and with thermoplastic olefins, known as "TPO polymers," as molding polymers.

### Example 6

A weatherable cast film formed from a fluoropolymer, an acrylate polymer, a urethane polymer, or a blend thereof, is bonded, with an acrylate adhesive, to an ABS, PVC, or nylon film to form a decorative sheet material. Articles are made with such decorative sheet materials according to the procedures set forth in Example 1, with nylon molding polymers.

In the drawings and specification, there has been disclosed typical preferred embodiments of the invention. Although specific terms are employed, they are used in a generic and descriptive sense only and not for purposes of limitation, the scope of the invention being set forth in the following claims.

## Claims

1. A molded automobile exterior body part (20) having a contoured decorative outer surface, comprising a molded polymer substrate (21) and a molded decorative sheet material (10) adhered to and covering one side of said substrate (21) and conforming to said contoured surface, characterized in that said decorative sheet material (10) comprises a substantially molecularly unoriented liquid or solvent cast weatherable thermoformable preformed self-supporting polymer film (13) having a thickness of between 0,0127 mm to 7,62 mm, said cast polymer film (13) having pigments uniformly distributed therein and providing a uniform layer of colour to the outer surface of said part (20) with the appearance of an automotive quality paint finish, a bonding layer (14) formed of a polymer different from said cast polymer film (13), said bonding layer (14) being adhered to the inner surface of the cast polymer film (13) and adhered to said molded polymer substrate (21), said bonding layer (14) comprising a film of a thermoformable polymer, and an adhesive layer adhering said thermoformoble polymer film to said inner surface of the cast polymer film (13).

2. A body part (20) according to Claim 1 wherein said weatherable polymer film (13) comprises a polymer selected from the group consisting of fluoropolymers and copolymers thereof, acrylate polymers and copolymers thereof, urethane polymers and copolymers thereof, and blends thereof.

3. A body part (20) as claimed in Claim 1, wherein said molecularly unoriented cast polymer film (13) has reflective pigments uniformly distributed therein.

4. A body part (20) according to Claim 1, wherein the tear strength of said molecularly unoriented cast polymer film (13) is less than the bond strength of the cast film (13) to said molded polymer substrate (21).

5. A body part (20) according to Claim 1, wherein said bonding layer (14) comprises a preformed polymer film laminated to the inner surface of said cast film (13).

6. A body part (20) according to Claim 1, wherein said bonding layer (14) comprises a preformed polyolefin film laminated to the inner surface of said cast film (13).

7. A body part (20) according to Claim 1, wherein said weatherable polymer film (13) comprises an alloy of a polyvinylidene fluoride polymer and an acrylic polymer.

## Patentansprüche

1. Geformtes äußeres Kraftfahrzeug-Karosserieteil (20) mit einer umrißprofilierten dekorativen Außenfläche, umfassend ein geformtes Polymer-Substrat (21) und ein geformtes dekoratives Folienmaterial (10), das an einer Seite des Substrats (21) anhaftet und sie bedeckt und an die umrißprofilierte Fläche angepaßt ist, dadurch gekennzeichnet, daß das dekorative Folienmaterial (10) eine im wesentlichen molekular unorientierte, aus Flüssigkeit oder mit Lösemittel gegossene, witterungsbeständige, warmformbare, vorgeformte, selbsttragende Polymer-Folie (13) von einer Dicke zwischen 0,0127 mm und 7,62 mm umfaßt, in der Pigmente gleichmäßig verteilt sind und an der Außenfläche des Teils (20) eine gleichmäßige Farbschicht vom Aussehen einer Kraftfahrzeug-Qualitätslackierung bilden, eine Haftschicht (14), die aus einem anderen Polymeren als die gegossene Polymer-Folie (13) gebildet ist, wobei die Haftschicht (14) an der Innenfläche der gegossenen Polymer-Folie (13) haftet und an das geformte Polymer-Substrat (21) angeklebt ist und eine Folie aus einem warmformbaren Polymeren umfaßt, und eine Klebstoffschicht, mit der die warmformbare Polymer-Folie an die Innenfläche der gegossenen Polymer-Folie (13) angeklebt ist.

2. Karosserieteil (20) nach Anspruch 1, bei dem die witterungsbeständige Polymer-Folie (13) ein Polymeres umfaßt, das aus der Gruppe mit Fluor-Polymeren und deren Copolymeren, Acrylat-Polymeren und deren Copolymeren, Urethan-Polymeren und deren Copolymeren und Gemischen davon gewählt ist.

3. Karosserieteil (20) nach Anspruch 1,
bei dem die molekular unorientierte, gegossene Polymer-Folie (13) gleichmäßig verteilte reflektierende Pigmente in sich aufweist.

4. Karosserieteil (20) nach Anspruch 1,
bei dem die Reißfestigkeit der molekular unorientierten, gegossenen Polymer-Folie (13) geringer ist als die Haftfestigkeit der gegossenen Folie (13) gegenüber dem geformten Polymer-Substrat (21).

5. Karosserieteil (20) nach Anspruch 1,
bei dem die Haftschicht (14) eine auf die Innenfläche der gegossenen Folie (13) kaschierte vorgeformte Polymer-Folie umfaßt.

6. Karosserieteil (20) nach Anspruch 1,
bei dem die Haftschicht (14) eine auf die Innenfläche der gegossenen Folie (13) kaschierte vorgeformte Polyolefin-Folie umfaßt.

7. Karosserieteil (20) nach Anspruch 1,
bei dem die witterungsbeständige Polymer-Folie (13) ein Verbundmaterial aus einem Polyvinyliden-Fluorid-Polymeren und einem Acryl-Polymeren umfaßt.

## Revendications

1. Elément moulé extérieur de carrosserie automobile (20) ayant une surface-extérieure décorative profilée, comprenant un substrat de polymère moulé (21) et un matériau décoratif moulé en feuille (10) collé sur une face de ce substrat (21) et le recouvrant en épousant la forme de ce substrat profilé, caractérisé en ce que ce matériau décoratif en feuille (10) comprend un film de polymère (13) autonome, préformé, thermoformable, résistant aux intempéries, coulé dans un liquide ou un solvant, pratiquement non orienté moléculairement, ayant une épaisseur comprise entre 0,0127 mm et 7,62 mm, ce film de polymère coulé (13) ayant des pigments uniformément dispersés dans le film et fournissant une couche de couleur uniforme à la surface extérieure de cet élément (20) avec l'aspect d'un fini de peinture de qualité automobile, une couche de liaison (14) formée d'un polymère différent de celui du film de polymère coulé (13), cette couche de liaison (14) étant collée à la surface intérieure du film polymère coulé (13) et collée à ce substrat de polymère moulé (21), cette couche de liaison (14) comprenant un film de polymère thermoformable et une couche adhésive faisant adhérer ce film de polymère thermoformable à cette surface intérieure du film de polymère coulé (13).

2. Elément de carrosserie (20) suivant la revendication 1, dans lequel ce film de polymère (13) résistant aux intempéries comprend un polymère choisi dans le groupe comprenant des fluoropolymères et leurs copolymères, des polymères acryliques et leurs copolymères, des polymères d'uréthane et leurs copolymères, et leurs mélanges.

3. Elément de carrosserie (20) suivant la revendication 1, dans lequel des pigments réfléchissants sont distribués uniformément dans ce film de polymère coulé (13) non orienté moléculairement.

4. Elément de carrosserie (20) suivant la revendication 1, dans lequel la résistance à la déchirure de ce film de polymère coulé (13) non orienté moléculairement est inférieure à la résistance de liaison du film coulé (13) à ce substrat de polymère moulé (21).

5. Elément de carrosserie (20) suivant la revendication 1, dans lequel cette couche de liaison (14) comprend un film de polymère préformé feuilleté à la surface intérieure de ce film coulé (13).

6. Elément de carrosserie (20) suivant la revendication 1, dans lequel cette couche de liaison (14) comprend un film de polyoléfine préformé feuilleté à la surface intérieure de ce film coulé (13).

7. Elément de carrosserie (20) suivant la revendication 1, dans lequel ce film de polymère (13) résistant aux intempéries comprend un alliage d'un polymère de fluorure de polyvinylidène et d'un polymère acrylique.
